# DEMANDE DE BREVET EUROPEEN

(11) **EP 3 232 418 A1**
(43) Date de publication de la demande: **18.10.2017**
(21) Numéro de dépôt: 17162736.7
(22) Date de dépôt: 24.03.2017
(51) Int. Cl.: G09B 9/00, G09B 19/00

(54) **VÉHICULE PÉDAGOGIQUE POUR LES SERVICES DE SECOURS ROUTIERS COMPRENANT UN DISPOSITIF DE SACS GONFLABLES COMMANDÉ INTENTIONNELLEMENT**

(30) Priorité: 12.04.2016 FR 1653210
(71) Demandeur: Renault s.a.s, 92100 Boulogne-Billancourt (FR)
(72) Inventeur: VEZINE, PATRICK, 95520 ONY (FR); ISTRIA, JEROME, 76300 SOTTEVILLE LES ROUEN (FR)

(57) **Abrégé**

L'invention concerne un véhicule pédagogique pour le secours routier, notamment pour l'apprentissage des gestes de désincarcération du véhicule et d'extraction des personnes de ce véhicule, caractérisé en ce que le véhicule comprend un dispositif d'activation d'au moins un sac gonflable, dont le déploiement est déclenché intentionnellement à l'aide d'une télécommande.

## Description

### Domaine de l'invention :

La présente invention concerne un véhicule pédagogique pour les services de secours routiers notamment pour l'apprentissage des gestes de désincarcération de véhicules et d'extraction de personnes de ces véhicules.

### Etat de la technique:

Comme expliqué dans le document FR 2 845 508 A1, le secours routier couvre différentes interventions et notamment la désincarcération de véhicules accidentés dans le but de secourir et extraire les victimes prisonnières des tôles de leur véhicule. Ces interventions sont habituellement effectuées par des sapeurs-pompiers. A cet effet, des programmes de formation des intervenants potentiels ont été élaborés. Dans le cadre de ces interventions le centre chargé de la formation doit s'approvisionner en véhicules épaves, qui ne peuvent être utilisés qu'une seule fois. Cette contrainte impose pour chaque nouvelle formation, comme énoncé dans le document FR 2 845 508 A1, de prévoir l'acquisition de ces véhicules épaves, leur transport jusqu'au lieu de la formation puis leur évacuation vers une casse ou une unité de recyclage en fin de formation. De plus, ces véhicules épaves doivent être préparés, protégés et nettoyés pour pouvoir assurer une formation en toute sécurité pour les intervenants (vidange des réservoirs, protection des parties coupantes etc.). Les coûts et la perte de temps sont relativement importants pour chaque formation. Des centres de formation pratiquant régulièrement des sessions doivent prévoir un budget conséquent pour cet d'apprentissage, ce qui s'avère de plus en plus difficile en particulier dans un contexte de maîtrise des dépenses publiques.

On connaît déjà via le document FR 2 845 508 A1 un véhicule pédagogique comprenant des éléments de structure et de carrosserie qui comportent des parties amovibles agencées pour être montées et démontées manuellement. Ces parties amovibles sont couplées entre elles et aux parties fixes de la structure ou de la carrosserie, par des moyens d'assemblage rapide dans des zones de jonction, ces zones de jonction étant positionnées dans des zones de coupe préconisées en cas de désincarcération du véhicule. Les parties amovibles comportent au moins les ouvrants, le pavillon et les montants latéraux du véhicule. Les documents FR2951304A1 et US201010019546 A1 décrivent également des véhicules à but pédagogiques permettant de monter et démonter manuellement des parties amovibles.

En revanche, si l'on sait que les services de secours simulant une intervention sur un véhicule accidenté doivent en premier lieu enlever la clé de contact et déconnecter la batterie de servitude aux fins de prévenir tout déclenchement intempestif d'un sac gonflable (airbag(s) en anglais), ces exercices supposent encore que les sacs gonflables non déployés lors d'un accident soient recouvert pour éviter de blesser un intervenant ou pompier, pour tenir compte de l'éventualité d'un déclenchement inopiné, et que les sacs déjà déployés lors du choc soient rabattus ou découpés. En l'état actuel de la technique, on ne connait pas de véhicule pédagogique permettant d'exercer convenablement les gestes et les opérations nécessaires vis-à-vis d'un ou plusieurs sac(s) gonflable(s) (airbag(s) en anglais) qui se seraient déployés lors d'un choc / accident. Les sacs gonflables concernés sont typiquement les sacs gonflables côté conducteur, côté passager, siège(s) et rideau(x).

### But de l'invention:

L'invention a pour but de pallier tout ou partie des inconvénients précédents en proposant un véhicule pédagogique amélioré destiné à l'apprentissage des gestes de désincarcération de véhicules et d'extraction de personnes de ces véhicules, en particulier pour exercer et valider les gestes associés aux sacs gonflables.
On note que l'apprentissage vise le respect d'une gamme d'opérations selon un enchainement prescrit. Ce n'est pas tant la fidélité ou représentativité exacte de chaque opération qui est évaluée lors d'une formation que le mode opératoire et l'enchainement des actions qui doivent être respectés.

### Objet de l'invention :

A cet effet, l'invention a pour objet un véhicule pédagogique pour le secours routier, notamment pour l'apprentissage des gestes de désincarcération du véhicule et d'extraction des personnes de ce véhicule, caractérisé en ce que le véhicule comprend un dispositif d'activation d'au moins un sac gonflable, dont le déploiement est déclenché intentionnellement à l'aide d'une télécommande.
Ainsi le véhicule pédagogique permet de commander le déploiement des sacs gonflables (ou « airbag » en anglais), au moment souhaité pour l'apprentissage et la répétition des gestes de secours, et de façon à pouvoir renouveler l'exercice autant de fois que nécessaire. Une fois les sacs déployés et l'exercice achevé, les sacs gonflables sont repliés et préparés pour pouvoir être déployés à nouveau. Les sacs ne subissent aucun endommagement au cours de ces déploiements et exercices.

Selon d'autres caractéristiques avantageuses de l'invention :
- le dispositif provoque le déploiement d'au moins un sac gonflable compris parmi les sacs gonflables suivants : sac gonflable conducteur, sac gonflable passager, sac gonflable latéral de siège, sac gonflable latéral rideau.
- le dispositif comprend au moins un compresseur, en particulier disposé dans le compartiment moteur du véhicule, relié à chaque sac gonflable à déployer.
- le dispositif comprend au moins un compresseur ayant un débit minimal de 300 litres par minutes et de préférence de l'ordre de 480 litres par minutes.
- le dispositif comprend une électrovanne par sac gonflable apte à mettre l'air en échappement sur un circuit d'arrivée ou de sortie du sac gonflable, afin de stopper le gonflage de chaque sac lorsque qu'un volume d'air adéquat est atteint.
- chaque sac gonflable comprend une enveloppe extérieure, une toile d'étanchéité intérieure, ainsi qu'un raccord étanche au dos du sac permettant de maintenir dans le sac un niveau de pression prédéterminée pendant au moins 5 secondes lorsque le volume d'air adéquat est atteint.

L'invention a également pour objet un procédé d'activation d'au moins un sac gonflable d'un véhicule pédagogique, comprenant au moins un sac gonflable compris parmi les sacs gonflables suivants : sac gonflable conducteur, sac gonflable passager, sac gonflable latéral de siège, sac gonflable latéral rideau, comprenant les étapes suivantes :
- déclenchement depuis une télécommande de la mise en marche d'au moins un compresseur envoyant de l'air dans le un sac gonflable,
- gonflage du sac gonflable jusqu'à l'obtention d'un volume d'air adéquat,
- maintien dans le sac d'un niveau de pression prédéterminée pendant au moins 5 secondes lorsque le volume d'air adéquat est atteint,

Selon un autre aspect de l'invention, le procédé comprend en outre une étape de mise à l'échappement de l'air envoyé dans le sac gonflable via une électrovanne, de façon à stopper le gonflage du sac lorsqu'une pression et/ou un volume d'air prédéterminé est atteint.

### Exposé de l'invention :

L'invention sera mieux comprise à la lecture de la description suivante d'un exemple non limitatif de l'invention, et à la lumière des dessins annexés sur lesquels :
- la figure 1 représente une vue schématique du côté d'un véhicule pédagogique équipé d'un dispositif d'activation d'au moins un sac gonflable selon l'invention, seul le sac gonflable conducteur étant représenté en configuration déployée,
- la figure 2 représente un compresseur d'air utilisé dans le véhicule de la figure 1,
- la figure 3 est une vue d'une électrovanne utilisée dans le véhicule de la figure 1,
   et
- la figure 4 est une vue d'une télécommande et d'un récepteur associé utilisé sur le véhicule de la figure 1, permettant de déclencher l'activation d'un ou plusieurs sac(s) gonflable(s).

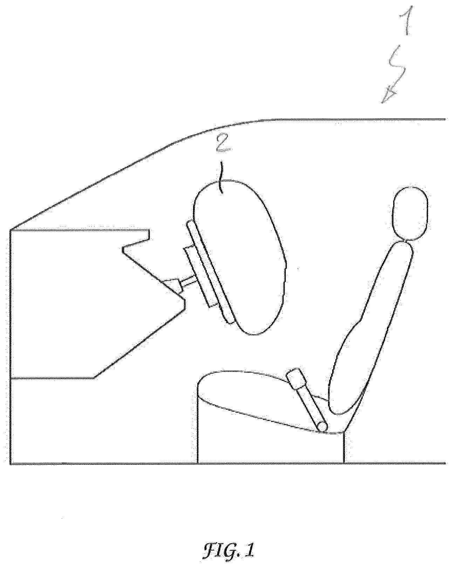

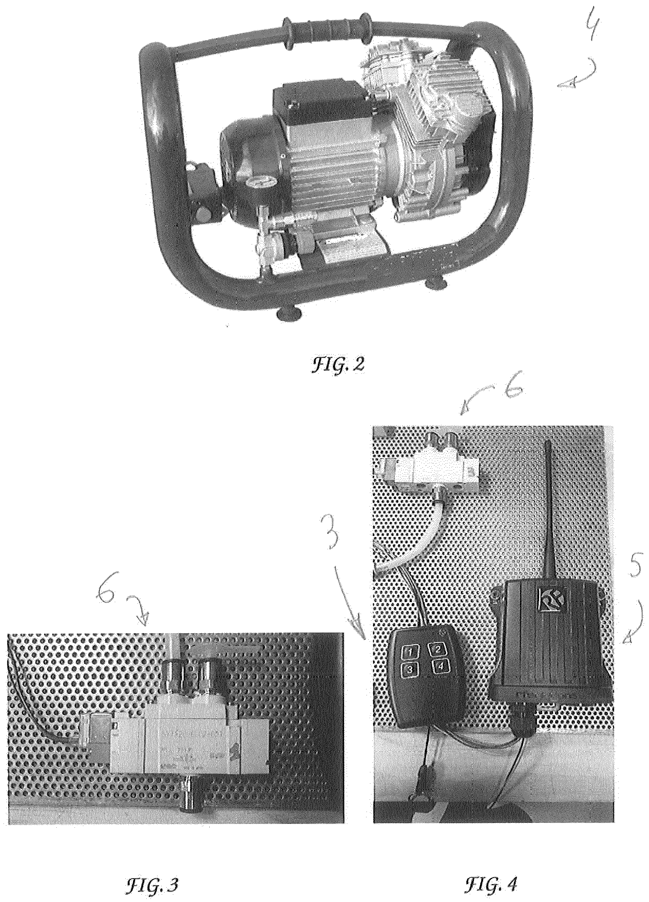

On a représenté à la figure 1 une vue latérale schématique d'un véhicule pédagogique 1 pour le secours routier, permettant l'apprentissage des gestes de désincarcération du véhicule et d'extraction des personnes de ce véhicule. Ce véhicule selon l'invention comprend un dispositif d'activation d'au moins un sac gonflable 2, dont le déploiement est déclenché intentionnellement à l'aide d'une télécommande 3, représentée à la figure 4.
Pour les besoins de l'illustration, seul le sac gonflable 2 conducteur est représenté en configuration déployée.

Dans l'invention, le dispositif permet d'activer et de déployer plusieurs sacs gonflables, à savoir :
- un sac gonflable conducteur, typiquement disposé dans le moyeu du volant, et recouvert par une coque d'habillage;
- un sac gonflable passager, typiquement disposé dans la partie de planche de bord qui est située en vis-à-vis du passager avant, et recouvert par un élément d'habillage de la planche de bord ;
- un sac gonflable latéral de siège, typiquement situé dans le volume du dossier de siège et accessible par son côté latéral ;
- un sac gonflable latéral rideau, typiquement situé au-dessus d'une ouverture latérale du véhicule, et recouvert par un élément d'habillage intérieur du véhicule.

Pour les besoins du véhicule pédagogique, seul un côté du véhicule, typiquement le côté droit, est équipé d'un sac gonflable de siège et d'un sac gonflable rideau. Les exercices d'intervention sur ces sacs sont réalisés de ce seul côté, en plus de l'intervention sur les sacs conducteur et passager.

Le dispositif comprend au moins un compresseur d'air 4 (figure 2) relié à chaque sac gonflable 2 à déployer au travers de tuyaux ou conduits adaptés (non représentés). Dans l'exemple illustré et non limitatif de l'invention, on a utilisé deux compresseurs de marque Contimac ®, de référence CM240/10/5W offrant un volume d'air cumulé de 2 x 240 litres / minutes, ce qui couvre amplement le volume d'air cumulé des différents sacs gonflables à déployer, qui est de l'ordre de 245 litres. Ces compresseurs d'air sont disposés par exemple dans le compartiment moteur du véhicule.
Ces compresseurs d'air 4 sont commandés par la télécommande 3 via le récepteur 5 disposé dans le véhicule.
La télécommande 3 permet sélectivement d'activer l'un ou l'autre des sacs gonflables, ou plusieurs simultanément.
Dans le cadre de l'invention, chaque sac gonflable déployé doit être maintenu en forme avec son volume maximal pendant une durée de l'ordre de 10 à 20 secondes, ou a minima de 5 secondes, permettant l'exercice et les manipulations d'un intervenant pendant cette même durée.
Pour assurer que le volume d'air reçu dans chaque sac gonflable 2 soit conservé pendant cette durée, et donc éviter l'excès de fuite d'air, chaque sac gonflable comprend une enveloppe à double couche : l'enveloppe est constituée d'une enveloppe extérieure et d'une toile d'étanchéité intérieure. Chaque sac gonflable comprend également un raccord étanche au dos du sac permettant de maintenir dans le sac un niveau de pression prédéterminée pendant la durée indiquée lorsque le volume d'air adéquat est atteint. En effet un sac gonflable de série a pour but de se déployer brutalement et d'absorber le choc dans un temps extrêmement réduit, sans besoin de maintenir un volume défini pendant une durée déterminée. Un sac gonflable de série n'est donc pas adapté au besoin de ce véhicule pédagogique, ce qui justifie qu'il ait fallu adapter les sacs gonflables de moyens d'étanchéité tant au niveau de l'enveloppe que du raccord.
Le dispositif comprend en outre une électrovanne 6 (figures 3 et 4), typiquement de la marque Radiospare ® dans l'exemple illustré, par sac gonflable apte à mettre l'air en échappement sur un circuit d'arrivée ou de sortie du sac gonflable, afin de stopper le gonflage de chaque sac lorsque qu'un volume d'air adéquat est atteint.
Le procédé d'activation des sacs gonflables du véhicule selon l'invention comprenant les étapes suivantes :
- déclenchement depuis une télécommande 3 de la mise en marche d'au moins un compresseur 4 envoyant de l'air dans le un sac gonflable 2,
- gonflage du sac gonflable 2 jusqu'à l'obtention d'un volume d'air adéquat,
- maintien dans le sac 2 d'un niveau de pression prédéterminée pendant au moins 5 secondes, par exemple entre 10 et 20 secondes, lorsque le volume d'air adéquat est atteint,

Le procédé comprend en outre une étape de mise à l'échappement de l'air envoyé dans le sac gonflable 2 via l'électrovanne 6, de façon à stopper le gonflage du sac 2 lorsqu'une pression et/ou un volume d'air prédéterminé est atteint.

Bien entendu, l'invention n'est pas limitée aux modes ou variantes de réalisation décrits précédemment et comprends tous les équivalents techniques de ces moyens.

## Revendications

**1.** Véhicule pédagogique 1 pour le secours routier, notamment pour l'apprentissage des gestes de désincarcération du véhicule et d'extraction des personnes de ce véhicule, **caractérisé en ce que** le véhicule 1 comprend un dispositif d'activation d'au moins un sac gonflable 2, dont le déploiement est déclenché intentionnellement à l'aide d'une télécommande 3.

**2.** Véhicule pédagogique 1 selon la revendication 1, **caractérisé en ce que** le dispositif provoque le déploiement d'au moins un sac gonflable 2 compris parmi les sacs gonflables suivants : sac gonflable conducteur, sac gonflable passager, sac gonflable latéral de siège, sac gonflable latéral rideau.

**3.** Véhicule pédagogique selon la revendication 1 ou 2, **caractérisé en ce que** le dispositif comprend au moins un compresseur d'air 4, en particulier disposé dans le compartiment moteur du véhicule, relié à chaque sac gonflable 2 à déployer.

**4.** Véhicule pédagogique selon la revendication 3, **caractérisé en ce que** le dispositif comprend au moins un compresseur d'air 4 ayant un débit minimal de 300 litres par minutes et de préférence de l'ordre de 480 litres par minutes.

**5.** Véhicule pédagogique selon l'une quelconque des revendications précédentes, **caractérisé en ce que** le dispositif comprend une électrovanne 6 par sac gonflable 2 apte à mettre l'air en échappement sur un circuit d'arrivée ou de sortie du sac gonflable 2, afin de stopper le gonflage de chaque sac 2 lorsque qu'un volume d'air adéquat est atteint.

**5.** Véhicule pédagogique selon l'une quelconque des revendications précédentes, **caractérisé en ce que** chaque sac gonflable 2 comprend une enveloppe extérieure, une toile d'étanchéité intérieure, ainsi qu'un raccord étanche au dos du sac permettant de maintenir dans le sac un niveau de pression prédéterminée pendant au moins 5 secondes lorsque le volume d'air adéquat est atteint.

**6.** Procédé d'activation d'au moins un sac gonflable d'un véhicule pédagogique, comprenant au moins un sac gonflable 2 compris parmi les sacs gonflables suivants : sac gonflable conducteur, sac gonflable passager, sac gonflable latéral de siège, sac gonflable latéral rideau, comprenant les étapes suivantes :
- déclenchement depuis une télécommande 3 de la mise en marche d'au moins un compresseur 4 envoyant de l'air dans le un sac gonflable 2,
- gonflage du sac gonflable 2 jusqu'à l'obtention d'un volume d'air adéquat,
- maintien dans le sac 2 d'un niveau de pression prédéterminée pendant au moins 5 secondes lorsque le volume d'air adéquat est atteint,

**7.** Procédé d'activation selon la revendication 6, **caractérisée en ce qu'**il comprend en outre une étape de mise à l'échappement de l'air envoyé dans le sac gonflable 2 via une électrovanne 6, de façon à stopper le gonflage du sac 2 lorsqu'une pression et/ou un volume d'air prédéterminé est atteint.
